# EUROPEAN PATENT APPLICATION

(11) **EP 4 389 345 A1**
(43) Date of publication of application: **26.06.2024**
(21) Application number: 23213099.7
(22) Date of filing: 29.11.2023
(51) Int. Cl.: B23Q 1/52, B23Q 11/08, B23Q 16/02

(54) **ROTARY TABLE DEVICE FOR WORKING MACHINE**

(30) Priority: 22.12.2022 JP 2022205044
(71) Applicant: Tsudakoma Kogyo Kabushiki Kaisha, Kanazawa-shi, Ishikawa-ken 921-8650 (JP)
(72) Inventor: SHIBAHARA, Masato, Kanazawa-shi, 921-8650 (JP)
(74) Representative: Zimmermann & Partner Patentanwälte mbB

(57) **Abstract**

A rotary table device includes an annular accommodation groove (71) opening to a gap (64) between a surface of a rotary body and a surface of a frame (10) facing each other in an axis line direction of a rotary shaft (30) and formed in the frame coaxially with the rotary shaft; a sealing piston (72; 172) accommodated to be slidable in the axis line direction; an elastic member (73) for urging the sealing piston toward the rotary body; a protrusion portion (14b; 114b) provided to the frame in a form of protruding in a radial direction of the rotary shaft from a peripheral edge of the accommodation groove (71) toward a center thereof so as to cover a part of the opening of the accommodation groove over an entire circumference; a pressure chamber (75) defined by the protrusion portion (14b; 114b) and the sealing piston (72; 172) with respect to the axis line direction; and a supply device (77).

## Description

### TECHNICAL FIELD

The present invention relates to a rotary table device for a working machine, including a rotary shaft having one end side to which a rotary body including a table to which a workpiece is attached is fixed, a frame configured to rotatably support the rotary shaft via a bearing within an accommodation hole, the rotary shaft being rotationally driven by a drive device, and an air seal mechanism configured to supply air from an air supply port formed in the frame in order to blow out the air from a gap between a surface of the rotary body and a surface of the frame facing each other in an axis line direction of the rotary shaft.

### BACKGROUND ART

A rotary table device for a working machine includes a rotary shaft having one end side to which a table to which a workpiece is attached is fixed, and a frame that rotatably supports the rotary shaft via a bearing within an accommodation hole, and the rotary shaft is configured to be rotationally driven by a drive device having a drive motor as a drive source, like a device disclosed in Patent Literature 1, for example. In addition, the rotary table device disclosed in Patent Literature 1 includes an air purge mechanism (air seal mechanism) for supplying air to a space within the frame in order to prevent a coolant liquid or the like from entering the space. Note that as for the air seal mechanism of the rotary table device, a pressure of air supplied to the space within the frame is generally set to a relatively low pressure (about 0.01 to 0.03 MPa) in order to prevent malfunctions such as protrusion of a seal member provided within the frame.

In the rotary table device, as air is supplied into the frame from an air supply flow channel (supply port) formed in the frame, the air is blown out from a gap between a lower surface of the table and an upper surface of the frame facing each other in an axis line direction of the rotary shaft to prevent foreign matters such as a coolant liquid from entering the frame.

Note that, in such a rotary table device, control of a supply device for supplying air into the frame as described above in the air seal mechanism is generally performed by a control device of a working machine provided with the rotary table device. For this reason, when an operation of the working machine is stopped, the supply of air into the frame by the air seal mechanism is also stopped.

In addition, in such a rotary table device, a temperature in the frame remains high during the operation of the working machine due to heat generation from the drive device, and the like, and gradually decreases along with the stop of the working machine. As the temperature decreases, a temperature of the air in the space within the frame also decreases, but usually, a volume of the air contracts as the temperature changes from a high-temperature state to a low-temperature state. For this reason, when the temperature decreases in a state in which the working machine is stopped and the supply of air into the frame by the air seal mechanism is stopped as described above, external air is drawn into the frame due to contraction of the air in the frame. As a result, even though the working machine is stopped and no processing is performed, foreign matters such as a coolant liquid in the outside may enter the frame through the gap.

Note that although not for working machines, a rotary table device (for a semiconductor manufacturing apparatus) provided with a similar air seal mechanism is disclosed in Patent Literature 2. In order to prevent foreign matters from entering the space within the frame when the supply of air into the frame by the air seal mechanism is stopped, the rotary table device of Patent Literature 2 is provided with a sealing piston for closing the gap along with the stop of the supply.

More specifically, in the rotary table device of Patent Literature 2, a seal case is fitted at a position facing the rotary body in an accommodation hole formed in the frame. Note that the seal case has a circular concave portion opening to the rotary body and formed coaxially with the rotary shaft. In addition, in the concave portion of the seal case, an annular sealing piston is accommodated to be slidable in the axis line direction. Further, a plurality of spring members (elastic members) for urging the sealing piston toward the rotary body are mounted between the sealing piston and the concave portion. As a result, in the rotary table device, the sealing piston is moved toward the rotary body by urging force of the elastic members and comes into contact with the rotary body, and a space on an inner side with respect to the sealing piston in the accommodation hole is closed with respect to a space on an outer side communicating with the outside.

In addition, the rotary table device of Patent Literature 2 includes a pressure chamber for moving the sealing piston toward a bottom surface of the concave portion (away from the rotary body) against the urging force of the elastic members. However, in the rotary table device, the pressure chamber is defined by a lower surface of the rotary body and an upper surface of the sealing piston facing each other in the axis line direction.

### CITATION LIST

### PATENT LITERATURE

Patent Literature 1: JP2017-205860A
Patent Literature 2: WO2006/004052

In the rotary table device having the air seal mechanism, it is necessary to blow out air from the gap between the rotary body and the frame during an operation of the rotary table device. Also in the rotary table device disclosed in Patent Literature 2, it is necessary to blow out air from the gap between the rotary body and the frame during an operation of the rotary table device, so it is necessary to space the sealing piston provided as described above from the rotary body during the operation. The sealing piston is spaced from the rotary body by supplying compressed air (seal gas) as a working fluid to the pressure chamber.

However, when the pressure chamber is defined by the lower surface of the rotary body and the upper surface of the sealing piston as described above, as the sealing piston is spaced from the rotary body, the space within the pressure chamber communicates with a space (space within the frame) on an inner side with respect to the sealing piston in the accommodation hole. As a result, the compressed air supplied to the pressure chamber is also supplied to the space within the frame.

For this reason, when the configuration of Patent Literature 2 using such a sealing piston is applied to a rotary table device for a working machine having an air seal mechanism as disclosed in Patent Literature 1 in order to prevent foreign matters from entering the frame while the working machine is stopped, there occurs a problem in that a structural malfunction occurs within the frame.

More specifically, in the rotary table device for a working machine, a pressure of air supplied to the space within the frame by the air seal mechanism is set to a relatively low pressure that does not cause malfunction for a seal member provided within the frame as described above. On the other hand, a pressure of a working fluid for spacing the sealing piston from the rotary body is set to a relatively high pressure because it is necessary to move the sealing piston against the urging force of the plurality of elastic members as described above. The pressure of the working fluid is much higher than the pressure of air supplied to the space within the frame by the air seal mechanism described above.

For this reason, when the compressed air as the working fluid supplied to the pressure chamber is supplied to the space within the frame along with the spacing of the sealing piston from the rotary body as described above, the pressure of air in the space within the frame increases, and thus, there occurs a problem in that a structural malfunction such as protrusion of the seal member provided within the frame occurs.

### SUMMARY

The present invention has been made in view of the above problems, and an object thereof is to provide a rotary table device for a working machine including the air seal mechanism as described above with a configuration capable of preventing the above-described structural malfunction from occurring within the frame while preventing foreign matters from entering the frame, even when the working machine is stopped and the supply of air into the frame by the air seal mechanism is stopped.

A preamble of the present invention is a rotary table device for a working machine, including a rotary shaft having one end side to which a rotary body including a table to which a workpiece is attached is fixed, a frame configured to rotatably support the rotary shaft via a bearing within an accommodation hole, the rotary shaft being rotationally driven by a drive device, and an air seal mechanism configured to supply air from an air supply port formed in the frame, particularly in order to blow out the air from a gap between a surface of the rotary body and a surface of the frame facing each other in an axis line direction of the rotary shaft.

In addition, the present invention is characterized in that the rotary table device includes: an annular accommodation groove opening to the gap and formed in the frame coaxially with the rotary shaft; a sealing piston accommodated to be slidable in the axis line direction in the accommodation groove; an elastic member for urging the sealing piston toward the rotary body; a protrusion portion provided to the frame in a form of protruding in a radial direction of the rotary shaft from a peripheral edge of the accommodation hole toward a center of the accommodation groove so as to cover a part of the opening of the accommodation groove over an entire circumference; a pressure chamber defined by the protrusion portion and the sealing piston with respect to the axis line direction; and a supply device configured to supply a working fluid with a pressure sufficient to displace the sealing piston toward a bottom surface of the accommodation groove against urging of the elastic member.

According to the present invention, in the rotary table device for a working machine based on the preamble as described above, the rotary table device includes the sealing piston accommodated to be slidable in the axis line direction in the accommodation groove formed in the frame (accommodation hole), and the elastic member for urging the sealing piston toward the rotary body. In addition, the accommodation groove is formed to open in the axis line direction so as to open toward the gap between the surface of the rotary body and the surface of the frame. Thereby, the sealing piston is displaced toward the rotary body by the urging force of the elastic body and comes into contact with the rotary body, thereby closing the gap.

Further, the rotary table device includes the protrusion portion provided to the frame in a form of protruding in the radial direction of the rotary shaft from the peripheral edge of the accommodation hole toward the center of the accommodation groove so as to cover a part of the opening of the accommodation groove over the entire circumference. The pressure chamber for displacing the sealing piston in a direction away from the rotary body for air seal is defined by the protrusion portion and the sealing piston (configured to slide in the accommodation groove).More specifically, the pressure chamber is defined by an inner surface (protrusion-inner surface) of the protrusion portion facing toward the accommodation groove and a surface (protrusion-facing surface) of the sealing piston facing the protrusion-inner surface, with respect to the axis line direction. In addition, the pressure chamber is defined by an inner peripheral surface of the accommodation groove (groove-inner peripheral surface) and a surface of the sealing piston (groove-facing surface) facing the groove-inner peripheral surface, with respect to the radial direction. The protrusion-inner surface and the groove-inner peripheral surface are surfaces that exist fixedly.

During an operation of the working machine, the working fluid is supplied to the pressure chamber to open the gap for air seal, and the sealing piston is displaced in the direction away from the rotary body against the urging of the elastic body. In this case, when the sealing piston is displaced as such, the groove- facing surface of the sealing piston slides in the axis line direction, which is a direction in which the accommodation groove is opened, at a position where an interval (distance in the facing direction) from the groove-inner peripheral surface that the groove-facing surface faces remains unchanged. Therefore, even when the groove-facing surface slides as such, a region of the pressure chamber in the radial direction does not change. On the other hand, the protrusion-facing surface of the sealing piston is displaced in the direction away from (in the facing direction) the protrusion-inner surface that the protrusion-facing surface faces. However, the displacement is performed only within the accommodation groove.

Note that the protrusion portion is provided to cover a part of the opening of the accommodation groove. In other words, the opening of the accommodation groove is open in the axis line direction in a part not covered by the protrusion portion, and thus, an open portion with respect to the protrusion portion exists. The pressure chamber is configured such that a space on the protrusion portion side in the accommodation groove is closed by the groove-facing surface of the sealing piston with respect to the radial direction. Therefore, the sealing piston is configured such that a part including the groove-facing surface is located in the open portion. Thereby, a size of the groove-facing surface can be set in the axis line direction without being limited by the protrusion portion.

Therefore, when the size of the groove-facing surface is made larger than a size of the pressure chamber (interval between the protrusion-inner surface and the protrusion-facing surface) in the axis line direction at the time when the sealing piston is most spaced from the rotary body by the displacement, the closing in the radial direction is maintained even if the sealing piston is displaced. Furthermore, according to the configuration of the present invention, it is possible to configure the sealing piston as such. Therefore, according to the rotary table device of the present invention, while the sealing piston is enabled to close the gap during the stop of the working machine, even when the sealing piston is displaced to open the gap during an operation of the working machine, the working fluid supplied for the displacement can be prevented from being supplied to the space within the frame. As a result, it is possible to prevent the above-described structural malfunction from occurring within the frame.

### BRIEF DESCRIPTION OF DRAWINGS

FIG. 1 is a front cross-sectional view showing a rotary table device to which the present invention is applied.
FIG.2 is an enlarged view of a main part of FIG. 1.
FIG.3 is a front cross-sectional view showing another embodiment of the rotation table device to which the present invention is applied.

### DESCRIPTION OF EMBODIMENTS

Hereinafter, one embodiment of a rotary table device for a working machine to which the present invention is applied will be described with reference to the drawings. Note that the example described below is an example in which the present invention is applied to a so-called horizontal rotary table device 1 installed with an axis line of a rotary shaft facing toward the vertical direction.

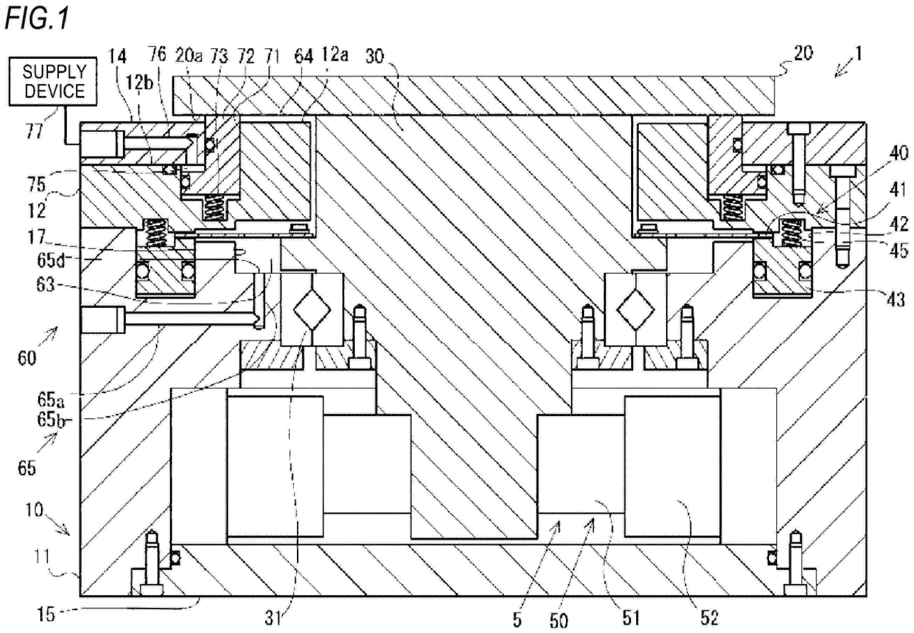

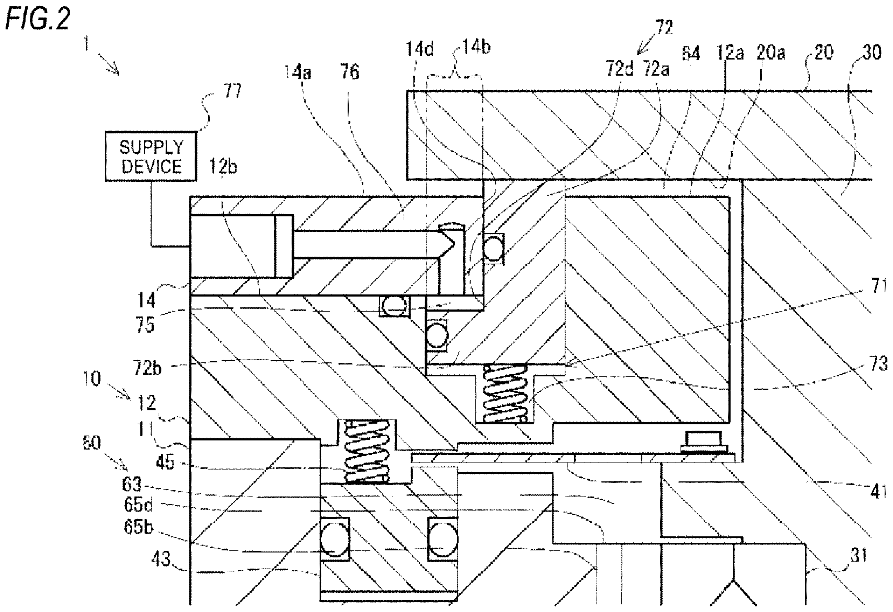

As shown in FIGS.1 and 2, the rotary table device 1 includes a frame 10 having an accommodation hole 17, a rotary shaft 30 rotatably supported with respect to a frame 10 via a bearing 31 within the accommodation hole 17, and a rotary table 20 attached to one end side of the rotary shaft 30. In addition, the rotary table device 1 includes a drive device 5 for rotationally driving the rotary shaft 30, and a clamp device 40 for holding the rotary shaft 30 at an indexed angular position.

The frame 10 is composed of a main body part 11, which is a main part, and a front cover 12 and a rear cover 15 attached to the main body part 11. In addition, the main body part 11 has a through-hole formed to penetrate from an end face on one end side toward an end face on the other end side.

The front cover 12 is attached to the end face on one end side of the main body part 11. The front cover 12 is a disk-shaped (doughnut disk-shaped) member with a through-hole at a center. The front cover 12 is attached to the main body part 11 in such arrangement that a center of the through-hole is made to coincide with a center of the through-hole in the main body part 11 in a plan view.

The rear cover 15 is configured as a disk-shaped cover member (without a through-hole). The rear cover 15 is attached to the main body part 11 on the other end side of the main body part 11 so as to close the through-hole of the main body part 11.

In the frame 10 configured as such, the respective through-holes of the main body part 11 and the front cover 12 are continuous in the penetrating direction, and the through-holes form the accommodation hole 17 in the frame 10. The accommodation hole 17 is in a state in which an end portion on the other end side is closed by the rear cover 15.

The rotary shaft 30 is a part of the rotary table device 1 to which the disk-shaped rotary table 20 on which a workpiece is placed is attached. The rotary shaft 30 is arranged in the accommodation hole 17 of the frame 10, and is rotatably supported with respect to the frame 10 by a bearing 31 mounted between the rotary shaft and the main body part 11. In addition, the rotary shaft 30 is provided such that a portion on one end side protrudes slightly outside the frame 10 from the front cover 12 of the frame 10 in the axis line direction in a state in which it is arranged in the accommodation hole 17 as such.

Additionally, the rotary table 20 is attached to an end face of the portion on one end side of the rotary shaft 30 in a direction in which a plate thickness direction thereof is made to coincide with the axis line direction. The rotary table 20 is attached to the rotary shaft 30 as such, so that the rotary table device 1 has a narrow gap 64 between an end face 20a of the rotary table 20 on the frame 10 side and an end face 12a of the frame 10 (front cover 12) on the rotary table 20 side facing each other in the axis line.

Further, in the main body part 11 of the frame 10, the through-hole is formed such that an inner diameter of the through-hole is enlarged within a range from approximately the center in the penetrating direction to the end face on the other end side. Further, the drive device 5 for rotationally driving the rotary shaft 30 is arranged at a portion of the through-hole where the inner diameter is enlarged. Note that, in the present embodiment, the drive device 5 is mainly composed of a direct drive motor (DD motor 50) that rotationally drives the rotary shaft 30 without intervening a drive mechanism such as a gear. In addition, the DD motor 50 is a so-called inner rotor-type DD motor 50, and a motor rotor 51 is fixed to the rotary shaft 30, and a motor stator 52 is fixed to the frame 10 in a form of surrounding the motor rotor 51.

The clamp device 40 is a so-called disk-type clamp device that holds the rotary shaft 30 by pressing the clamp piston 43 against a clamp disk 41 attached to the rotary shaft 30. As for the clamp device 40, the main body part 11 of the frame 10 is formed with an accommodation groove 42 opening to an end face on the front cover 12 side such that the accommodation groove is concentric with the rotary shaft 30 around the rotary shaft 30. The ring-shaped clamp piston 43 is accommodated in the accommodation groove 42. Additionally, the clamp piston 43 is adapted to be displaceable in the axis line direction in a state of being accommodated in the accommodation groove 42 as such.

Note that in the frame 10, a gap exists between the main body part 11 and the front cover 12 on an inner side with respect to the accommodation groove 42 of the main body part 11 in the radial direction of the rotary shaft 30. Additionally, the clamp disk 41 is attached to the rotary shaft 30 not to be relatively rotatable at a position of the gap in the axis line direction. Further, the clamp disk 41 is sized so that an outer peripheral edge thereof is located within the accommodation groove 42 in the radial direction.

Additionally, a compression spring 45 is mounted between the clamp piston 43 and the front cover 12 at a position on an outer side with respect to the clamp disk 41 in the radial direction. Thereby, the clamp piston 43 is always urged toward a bottom surface of the accommodation groove 42 (in a direction away from the clamp disk 41). Further, as the working fluid is supplied to a space between the clamp piston 43 and the bottom surface of the accommodation groove 42, the clamp piston 43 is displaced toward the front cover 12 by pressure of the working fluid, and the clamp disk 41 is sandwiched by the clamp piston 43 and the front cover 12. As a result, the rotary shaft 30 becomes unable to rotate.

Additionally, the rotary table device 1 described above is provided with an air seal mechanism 60 for preventing foreign matters from entering the frame 10. The air seal mechanism 60 is provided with a supply flow channel 65 formed in the main body part 11 of the frame 10 in order to supply air for seal to the internal space of the frame 10.

The supply flow channel 65 is composed of an outer portion 65a opening to an outer surface of the main body part 11 and extending in the radial direction, and an inner portion 65b opening to an end face on one end side of the main body part 11 within the frame 10 and extending in the axis line direction. Note that, as described above, the rotary shaft 30 is supported by the bearing 31 mounted between the rotary shaft and the main body part 11. In other words, the bearing 31 is mounted between the main body part 11 and the rotary shaft 30 within the through-hole of the main body part 11. Additionally, the inner portion 65b of the supply flow channel 65 is formed to open toward an end face of the main body part 11 located on one end side with respect to the bearing 31, on an inner side with respect to the accommodation groove 42 in the radial direction.

Thereby, the supply flow channel 65 communicates with a space 63 on the rotary table 20 side (space communicating with the gap 64 described above) with respect to the bearing 31 inside the frame 10. An opening 65d of the inner portion 65b with respect to the main body part 11 inside the frame 10 becomes an air supply port.

In addition, the outer portion 65a of the supply flow channel 65 is formed to communicate the opening to the outer surface of the main body part 11 and the inner portion 65b as described above. Additionally, the supply flow channel 65 is connected to an air (compressed air) supply device provided externally, which will be described later, at the opening to the outer surface of the main body part 11.

By supplying the air to the supply flow channel 65, the air is supplied to the space 63 inside the frame 10 from the air supply port 65d via the supply flow channel 65. In addition, the air is supplied to the space 63 as such, so that the air is blown out from the gap 64 between the end face 20a of the rotary table 20 and the end face 12a of the front cover 12 because the space 63 communicates with the gap 64 as described above. Thereby, an air seal for preventing foreign matters from entering the frame 10 is realized.

Note that a pressure of the air supplied for the air seal is set to a relatively low pressure in order to prevent malfunctions such as protrusion of the seal member provided in the frame. Specifically, the pressure of the air is adjusted to about 0.01 to 0.03 MPa. For reference, the clamp disk 41 exists within the space 63 described above. Therefore, the rotary table device 1 has such a configuration that air is supplied toward the gap 64 even when the clamp disk 41 is sandwiched by the clamp piston 43 and the front cover 12 (e.g., the clamp disk 41 is formed with a plurality of ventilation holes penetrating in the plate thickness direction).

In the rotary table device 1 for a working machine described above, according to the present invention, the rotary table device 1 is configured to include the annular accommodation groove opening to the gap 64 and formed in the frame 10 coaxially with the rotary shaft 30, the sealing piston slidably accommodated in the accommodation groove, and the elastic member for urging the sealing piston toward the rotary table 20. In addition, the rotary table device 1 has the protrusion portion provided to the frame 10 in a form of protruding in the radial direction from the peripheral edge of the accommodation groove toward the center of the accommodation groove so as to cover a part of the opening of the accommodation groove over the entire circumference, and is configured to define the pressure chamber for displacing the sealing piston away from the rotary table 20 for air seal by the protrusion portion and the sealing piston. One embodiment of the rotary table device 1 of the present invention will be described in detail below.

In the rotary table device 1, the front cover 12 of the frame 10 is formed with an annular groove (accommodation groove) 71 opening to the end face 12a on the circular table 20 side and concentric with the rotary shaft 30 around the rotary shaft 30. However, the accommodation groove 71 is formed to be located within a range of the rotary table 20 in a plan view of the rotary table device 1. Thereby, the accommodation groove 71 is configured as a groove opening to the gap 64 in the axis line direction.

Note that the front cover 12 is a member forming a disk shape (doughnut disk shape) as described above, but is formed such that a thickness dimension of a portion (outer portion) on an outer side with respect to the accommodation groove 71 in the radial direction is smaller than a thickness dimension of a portion (inner portion) on an inner side with respect to the accommodation groove 71. In addition, the thickness dimension of the inner portion of the front cover 12 is set such that the gap 64 (gap 64 between the end face 12a of the inner portion and the end face 20a of the rotary table 20 facing each other in the axis line direction) between the inner portion and the rotary table 20 is a narrow gap enough to allow air for air seal to be blown out to the outside of the frame 10.

Further, the sealing piston 72 is provided in the form of being accommodated in the accommodation groove 71. Note that the sealing piston 72 is formed to have an annular shape in a plan view in order to be accommodated in the accommodation groove 71 as such, an inner diameter thereof is substantially the same as a diameter of the inner peripheral surface on an inner side of the accommodation groove 71, and an outer diameter thereof is substantially the same as a diameter of the inner peripheral surface on an outer side of the accommodation groove 71. Therefore, the sealing piston 72 is accommodated in the accommodation groove 71 while the inner and outer peripheral surfaces thereof are in contact (sliding contact) with the corresponding inner peripheral surface of the accommodation groove 71.

In addition, the sealing piston 72 is a cylindrical member having an annular shape in a plan view as described above, but the inner and outer portions with respect to the approximately middle portion in the radial direction have different dimensions in the axis line direction. Specifically, the sealing piston 72 includes a main portion 72a, which is an inner main portion, and a flange-shaped flange portion 72b formed to protrude outward from the main portion 72a on one end side of the main portion 72a in the axis line direction.

In addition, in the sealing piston 72, a dimension of the main portion 72a in the axis line direction (the axis line direction in the state of being accommodated in the accommodation groove 71) is substantially the same as an interval between the end face 12a of the inner portion of the front cover 12 and the bottom surface of the accommodation groove 71 in the axis line direction. Therefore, the sealing piston 72 can be displaced (slid) in the axis line direction by a size of the gap 64 in the axis line direction while being accommodated in the accommodation groove 71. Additionally, a dimension of the flange portion 72b in the axis line direction is smaller than a dimension obtained by subtracting the size of the gap 64 from the interval between the end face 12b of the outer portion of the front cover 12 and the bottom surface of the accommodation groove 71 in the axis line direction. The sealing piston 72 is provided such that one end side (flange portion 72b side) becomes the bottom surface side of the accommodation groove 71 in the axis line direction.

A plurality of compression springs 73, which are elastic members, are mounted at intervals in a circumferential direction of the accommodation groove 71 between the sealing piston 72 and the bottom surface of the accommodation groove 71. Thereby, the sealing piston 72 is always biased toward the rotary table 20 side in the axis line direction.

In addition, a protrusion member 14 for forming the pressure chamber, to which the working fluid for displacing the sealing piston 72 against the urging force of the compression springs 73 is supplied, in combination with the sealing piston 72 is attached to the front cover 12 of the frame 10. More specifically, the protrusion member 14 is a disk-shaped (doughnut disk-shaped) member with a through-hole at a center. Additionally, the protrusion member 14 is configured so that an inner diameter is substantially the same as an outer diameter of the main portion 72a of the sealing piston 72 and an outer diameter is substantially the same as an outer diameter of the front cover 12. Further, a thickness dimension of the protrusion member 14 is such that, when the protrusion member 14 is attached to the outer portion of the front cover 12, a position of the end face 14a on the circular table 20 side in the axis line direction is substantially the same as a position of the end face 12a on the circular table 20 side of the inner portion of the front cover 12.

Further, the protrusion member 14 is attached to the end face 12b on the rotary table 20 side of the outer portion of the front cover 12 in such arrangement that a center of the through-hole of the protrusion member is made to coincide with the center of the through-hole of the front cover 12 in a plan view. In the state in which the protrusion member 14 is attached to the front cover 12 as such, a portion on an inner periphery side of the protrusion member 14 protrudes from an inner peripheral surface of the outer side of the accommodation groove 71 (outer peripheral surface of the accommodation groove 71) toward a center of the accommodation groove 71 in the radial direction. The portion protruding in the radial direction on the inner periphery side of the protrusion member 14 becomes a protrusion portion 14b provided to the frame 10 in a form of protruding in the radial direction from a peripheral edge of the accommodation groove 71 toward the center of the accommodation groove 71 so as to cover a part of the opening of the accommodation groove 71 over the entire circumference.

In the state in which the protrusion member 14 is attached to the front cover 12 as such, an inner peripheral surface 14d of the through-hole of the protrusion member 14 is in contact with an outer peripheral surface (groove-facing surface) of the main portion 72a of the sealing piston 72 accommodated in the accommodation groove 71 as described above. That is, in that state, the inner peripheral surface 14d of the through-hole of the protrusion member 14 and the groove-facing surface 72d of the sealing piston 72 are in slidable contact with each other.

Note that the sealing piston 72 is in a state in which an outer peripheral surface of the flange portion 72b is in slidable contact with an inner peripheral surface on the outer diameter side of the accommodation groove 71. In addition, in that state, an end face on the accommodation groove 71 side of the protrusion portion 14b of the protrusion member 14 and an end face on the rotary table 20 side of the flange portion 72b face each other in the axis line direction. Thereby, in the rotary table device 1, a closed space 75 defined by the protrusion portion 14b of the protrusion member 14, the sealing piston 72b, and the accommodation groove 71 is formed.

Additionally, the protrusion member 14 is formed with a supply flow channel 76 for supplying the working fluid to the space 75. The supply flow channel 76 is composed of a supply portion opening to the space 75 and extending in the axis line direction, and an introduction portion communicating with the supply portion, extending in the radial direction and opening to an outer surface of the protrusion member 14. The supply flow channel 76 is connected to a supply device 77 of the working fluid at the opening of the introduction portion.

The working fluid is supplied to the space 75 by the supply device 77 via the supply flow channel 76, so that the pressure of the working fluid displaces the sealing piston 72 away from the rotary table 20 (toward the bottom surface of the accommodation groove 71). Therefore, the space 75 becomes a pressure chamber to which the working fluid for displacing the sealing piston 72 against the urging force of the compression springs 73 is supplied.

In addition, in the present embodiment, the working fluid supplied to the pressure chamber 75 is compressed air, and the supply device 77 supplies the compressed air. Note that although not shown, the supply device 77 is also used as a supply device for supplying air (compressed air) to the air seal mechanism 60 described above.

However, as described above, the pressure of the air supplied for air seal is relatively low and is about 0.01 to 0.03 MPa. On the other hand, a pressure of the compressed air supplied to the pressure chamber 75 needs to be a pressure at which the sealing piston 72 is displaced against the urging force of the compression springs 73, is higher than the pressure of the air supplied to the air seal mechanism 60, and is, for example, about 0.4 MPa. Therefore, a pressure regulator for adjusting the pressure of the compressed air is provided in a supply pipe connecting the supply device 77 and a supply flow channel 65 (air seal mechanism 60). In addition, the supply device 77 supplies the compressed air with the pressure supplied to the pressure chamber 75, and on the air seal mechanism 60 side, the pressure regulator adjusts the pressure of the air that is supplied to the supply flow channel 65 to the low pressure as described above.

In the rotary table device 1 described above, the compressed air (air) is supplied by the supply device 77 during an operation of a working machine provided with the rotary table device 1. Therefore, the compressed air is supplied to the supply flow channel 65, so that the air is supplied to the internal space 63 of the frame 10 from the air supply port 65d. Additionally, since the compressed air from the supply device 77 is also supplied to the pressure chamber 75 via the supply flow channel 76, the sealing piston 72 is displaced away from the rotary table 20. Thereby, in the rotary table device 1, the gap 64 is in an open state, and the air is supplied to the internal space 63 of the frame 10 as described above, so that the air is blown out toward the outside from the gap 64 communicating with the space 63. That is, the rotary table device 1 is in a state in which the air seal is functioning.

On the other hand, when the working machine stops, the supply of the compressed air (air) by the supply device 77 is stopped, so the air is not supplied to the supply flow channel 65, and the air seal is not functioning in the rotary table device 1. However, when the supply of the compressed air from the supply device 77 is stopped, the compressed air is no longer supplied to the supply flow channel 76 (pressure chamber 75) as well. Therefore, the sealing piston 72 is displaced toward the rotary table 20 by the urging force of the compression springs 73 and comes into contact with the end face 20a on the frame 10 side of the rotary table 20. As a result, since the gap 64 between the end face 12a of the frame 10 and the end face 20a of the rotary table 20 is closed, even when the air seal is not functioning as described above, foreign matters are prevented from entering the frame 10.

In addition, in the rotary table device 1, the pressure chamber 75 formed in the accommodation groove 71 in which the sealing piston 72 is accommodated has a surface on the opening side of the accommodation groove 71 defined by the protrusion portion 14b, and the protrusion portion 14b (protrusion member 14) is provided so that the groove-facing surface 72d of the sealing piston 72 is in slidable contact with the inner peripheral surface 14d. Thereby, the pressure chamber 75 is maintained in the closed state over a range within which the sealing piston 72 is displaced. Therefore, even when the compressed air is supplied to the pressure chamber 75 so that the gap 64 is opened during an operation of the working machine as described above, the compressed air is not supplied to the internal space 63 of the frame 10 that communicates with the gap 64, and therefore, it is possible to prevent malfunctions such as protrusion of the seal member provided within the frame 10 due to an increase in air pressure in the space within the frame.

In the above, one embodiment of the rotary table device for a working machine of the present invention has been described. However, the rotary table device for a working machine of the present invention is not limited to the above embodiment, and can also be implemented in following modified examples.

### Protrusion Portion of Pressure Chamber

(1) As for the pressure chamber, in the rotary table device 1 of the above embodiment, the pressure chamber 75 for displacing the sealing piston 72 away from the rotary table 20 is provided to be located on the outer side with respect to the main portion 72a of the sealing piston 72 in the radial direction. However, in the present invention, the pressure chamber may be provided to be located on an inner side with respect to the main portion of the sealing piston in the radial direction. In this case, the protrusion portion is provided to protrude in the radial direction from the inner peripheral edge of the accommodation groove toward the center of the accommodation groove.

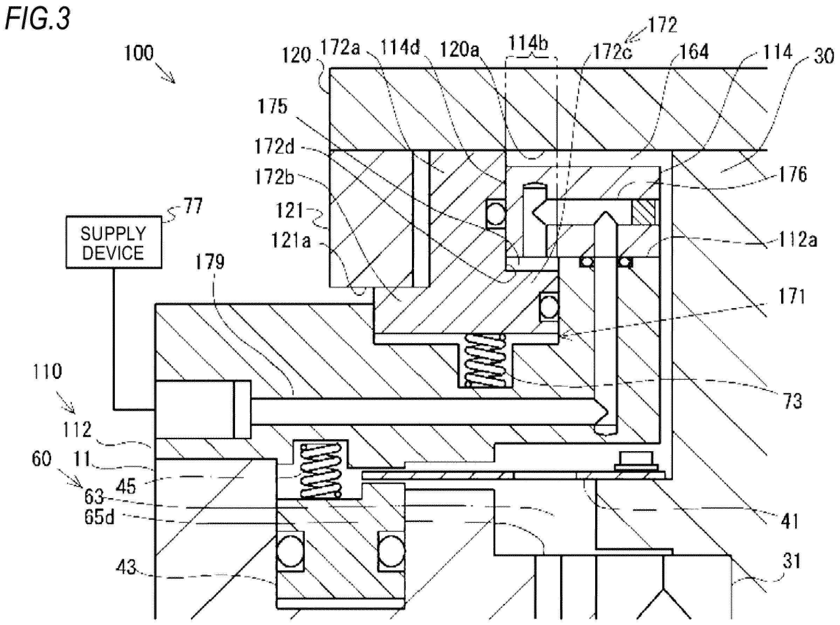

Specifically, for example, an example shown in FIG.3 is considered. In this example, in a rotary table device 100, a front cover 112 is configured such that a gap between a portion (end face 112a) on an inner side with respect to an accommodation groove 171 and a rotary table 120 (end face 120a) is larger than that of the above embodiment. In addition, a sealing piston 172 accommodated in the accommodation groove 171 is configured to have an inner collar portion 172c protruding toward the inner side, in addition to a flange portion 172b protruding toward the outer side as in the above embodiment with respect to a main portion 172a.

Additionally, a protrusion member 114 whose inner diameter is the same as an inner diameter of the front cover 112 is attached to an end face 112a of the front cover 112. However, a thickness dimension of the protrusion member 114 is such that a gap 164 between the protrusion member 114 and the rotary table 120 is about the same size as the gap 64 in the above embodiment in a state in which the protrusion member is attached to the end face 112a. In addition, an outer diameter of the protrusion member 114 is substantially the same as an inner diameter of the main portion 172a of the sealing piston 172.

Thereby, in the state in which the protrusion member 114 is attached to the end face 112a of the front cover 112, a portion on an outer periphery side of the protrusion member 114 protrudes in the radial direction from an inner peripheral edge of the accommodation groove 171, and an outer peripheral surface 114d of the protrusion member 114 is in slidable contact with an inner peripheral surface 172d of the main portion 172a of the sealing piston. A portion of the protrusion member 114 protruding in the radial direction from the inner peripheral edge of the accommodation groove 171 becomes a protrusion portion 114b.

According to the configuration, a closed space 175 defined by the protrusion portion 114b, the sealing piston 172, and the accommodation groove 171 is formed on an inner side with respect to the main portion 172a of the sealing piston 172 in the radial direction. Additionally, the frame 110 (the protrusion member 114 and the front cover 114) is formed with supply flow channels 176 and 179 for supplying compressed air to the space 175, so that the space 175 becomes a pressure chamber to which compressed air for displacing the sealing piston 172 away from the rotary table 120 is supplied.

(2) As for the configuration of closing the gap between the surface of the rotary body and the surface of the frame communicating with the outside in order to blow out air for air seal, in the above embodiment, the gap is closed by bringing the main portion of the sealing piston into contact with the end face on the frame side of the rotary table. However, the configuration for closing the gap is not limited to such a configuration, and may also be a configuration shown in FIG.3, for example.

Specifically, the example shown in FIG.3 is an example in which the rotary table device is configured such that a cylindrical cover 121 is attached to the end face 120a of the rotary table 120 on the frame 110 side in a form of protruding toward the frame 110. Note that an inner diameter of the cover 121 is slightly larger than an outer diameter of the main portion 172a of the sealing piston 172, and a dimension of the cover 121 in the axis line direction is such that the gap between the cover and the front cover 112 is about the same size as the gap 64 in the above embodiment. Thereby, in the rotary table device, the gap between the cover 121 and the front cover 112 becomes a gap through which air for air seal is blown out (gap communicating with the outside).

In addition, the rotary table device is configured such that, as the sealing piston 172 is displaced toward the rotary table 120, the flange portion 172b of the sealing piston 172 comes into contact with the end face 121a of the cover 121 on the frame 110 side to close the gap.

(3) As for the elastic member for urging the sealing piston toward the rotary body, in the above embodiment, the compression spring 73 is used as the elastic member. However, in the present invention, the elastic member is not limited to the compression spring, and may be, for example, a disc spring or a wave washer. Note that, in the case of a disc spring or a wave washer, the elastic member may be provided as a single member spanning the circumferential direction. In addition, the elastic member is not limited to being made of a metal material, and may also be made of a rubber material such as a rubber bush or a rubber washer, for example.

(4) In the above embodiment, in the rotary table device 1, the supply device 77 for supplying the working fluid to the pressure chamber for displacing the sealing piston away from the rotary body is configured to supply the air for air seal to the air seal mechanism 60 as well. However, in the present invention, the rotary table device may be configured such that the supply device supplies the compressed air only to the pressure chamber. In this case, in the rotary table device, the air seal mechanism is configured such that air is supplied from a device for supplying air for air seal provided separately from the supply device.

In addition, in the above embodiment, the working fluid supplied to the pressure chamber by the supply device is compressed air, but in the case of the rotary table device in which the supply of air to the air seal mechanism is performed by the device separate from the supply device as described above, the working fluid may be operating oil. That is, the supply device may be configured to supply operating oil.

(5) As for the rotary table device for a working machine, which is the preamble of the present invention, in the above embodiment, the rotary table device 1 is a so-called rotary table device installed with the axis line of the rotary shaft 30 facing toward the vertical direction. However, the rotary table device to which the present invention is applied is not limited to such a horizontal rotary table device, and may also be a so-called vertical rotary table device installed with the axis line of the rotary shaft facing toward the horizontal direction.

In addition, in the above embodiment, the drive device 5 of the rotary table device 1 is mainly composed of the direct drive motor (DD motor) 50 that rotationally drives the rotary shaft 30 without intervening a drive transmission mechanism such as a gear. However, in the rotary table device that is the preamble of the present invention, the drive device may be configured so that the drive motor rotationally drives the rotary shaft via the drive transmission mechanism.

Note that the present invention is not limited to any embodiment described above, and can be appropriately changed without departing from the gist of the present invention.

### REFERENCE SIGNS LIST

1: rotary table device,
5: drive device,
10: frame,
11: main body part,
12: front cover,
12a: end face,
12b: end face,
14: protrusion member,
14a: end face,
14b: protrusion portion,
14d: inner peripheral surface,
15: rear cover,
17: accommodation hole,
20: rotary table,
20a: end face,
30: rotary shaft,
31: bearing,
40: clamp device,
41: clamp disk,
42: accommodation groove,
43: clamp piston,
45: compression spring,
50: DD motor,
51: motor rotor,
52: motor stator,
60: air seal mechanism,
63: space,
64: gap,
65: supply flow channel,
65a: outer portion,
65b: inner portion,
65d: air supply port,
71: accommodation groove,
72: sealing piston,
72a: main portion,
72b: flange portion,
72d: groove-facing surface,
73: compression spring,
75: pressure chamber,
76: supply flow channel,
77: supply device,
100: rotary table device,
110: frame,
112: front cover,
112a: end face,
114: protrusion member,
114b: protrusion portion,
114d: inner peripheral surface,
120: rotary table,
120a: end face,
121: cover,
121a: end face,
164: gap,
171: accommodation groove,
172: sealing piston,
172a: main portion,
172b: flange portion,
172c: inner collar portion,
172d: inner peripheral surface,
175: pressure chamber,
176: supply flow channel,
179: supply flow channel

## Claims

1. A rotary table device (1) for a working machine, including: a rotary shaft (30) having one end side to which a rotary body including a table (20) to which a workpiece is attached is fixed; a frame (10) configured to rotatably support the rotary shaft (30) via a bearing (31) within an accommodation hole (17), the rotary shaft being rotationally driven by a drive device (5); and an air seal mechanism (60) configured to supply air from an air supply port (65d) formed in the frame (10) in order to blow out the air from a gap (64) between a surface of the rotary body and a surface of the frame facing each other in an axis line direction of the rotary shaft, the rotary table device being **characterized by** comprising:
an annular accommodation groove (71) opening to the gap (64) and formed in the frame (10) coaxially with the rotary shaft (30);
a sealing piston (72; 172) accommodated to be slidable in the axis line direction in the accommodation groove (71);
an elastic member (73) for urging the sealing piston (72; 172) toward the rotary body;
a protrusion portion (14b; 114b) provided to the frame in a form of protruding in a radial direction of the rotary shaft from a peripheral edge of the accommodation groove (71) toward a center of the accommodation groove so as to cover a part of the opening of the accommodation groove over an entire circumference;
a pressure chamber (75) defined by the protrusion portion (14b; 114b) and the sealing piston (72; 172) with respect to the axis line direction; and
a supply device (77) configured to supply a working fluid with a pressure sufficient to displace the sealing piston toward a bottom surface of the accommodation groove against urging of the elastic member.
